(19) Europäisches Patentamt
European Patent Office
Office européen des brevets

(11) **EP 3 351 993 A1**

(12) **EUROPEAN PATENT APPLICATION**

(43) Date of publication:
**25.07.2018 Bulletin 2018/30**

(51) Int Cl.:
***G02B 27/01*** *(2006.01)*

(21) Application number: **17203094.2**

(22) Date of filing: **22.11.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **19.01.2017 CN 201710043567**

(71) Applicant: **Coretronic Corporation Hsin-Chu 300 (TW)**

(72) Inventors:
• **SHIH, Chih-Wei**
  **300 Hsin-Chu (TW)**
• **WEI, Chung-Ting**
  **300 Hsin-Chu (TW)**
• **CHENG, Chuan-Te**
  **300 Hsin-Chu (TW)**

(74) Representative: **Ter Meer Steinmeister & Partner Patentanwälte mbB**
  **Nymphenburger Straße 4**
  **80335 München (DE)**

(54) **OPTICAL SYSTEM AND HEAD-MOUNTED DISPLAY DEVICE**

(57) An optical system for receiving an image light is provided. A first optical waveguide device of the optical system includes a first light entering surface, a first light exiting surface and at least one beam splitter. A second optical waveguide device of the optical system includes a first surface, a second surface opposite to the first surface and at least one beam splitter. The image light enters the first optical waveguide device via the first light entering surface, and exits from the first optical waveguide device via the first light exiting surface. One part of the first surface is a second light entering surface, and the other part of the first surface is a second light exiting surface. The second surface has multiple optical microstructures.

FIG. 1A

**Description**

CROSS-REFERENCE TO RELATED APPLICATION

This application claims the priority benefit of China application serial no. 201710043567.0, filed on January 19, 2017. The entirety of the above-mentioned patent application is hereby incorporated by reference herein and made a part of this specification.

BACKGROUND OF THE INVENTION

1. Field of the Invention

The invention relates to an optical system and a display device, and in particular, to an optical system and a head-mounted display device.

2. Description of Related Art

A near eye display (NED) and a head-mounted display (HMD) are next generation killer products with great development potentialities at present. Related applications of NED technologies may be currently divided into an augmented reality (AR) technology and a virtual reality (VR) technology. In terms of the AR technology, related developers are currently devoted to how to provide the best image quality on the premise of a thin volume of the HMD.

In a basic optical architecture of achieving AR by the HMD, an image light for display, after being emitted by a projection device, is reflected by a semi-reflecting and semi-transmitting optical element to enter a user's eyes. Image light beams and external ambient light beams may all enter the user's eyes, to achieve an AR display effect. Currently, in order to achieve a wide-angle display effect, a beam splitter array waveguide architecture is the best choice that can combine a wide angle, a true color image and a thin volume in various AR NED optical architectures. An optical waveguide device with such an architecture has multiple beam splitters, and can guide the image light of the projection device into the user's eyes.

Generally, the beam splitter of the HMD with such an architecture has a coating film, and can reflect light incident with a small incident angle and make light incident with a large incident angle transmit. The reflected light may generally be slightly obliquely guided into the user's eyes in an expected direction, and then cause the user to see an expected image. In addition, the light transmitted the beam splitter may travel to next beam splitter. However, in actual use, the coating film can only cause incident light in a particular incident angle range to transmit. When the light is incident into the beam splitter with a too large incident angle during travel in the optical waveguide device, some light may be reflected on the beam splitter. The unexpected reflected light (stray light) may continue travelling in the optical waveguide device, and in a situation of being subsequently incident into the beam splitter with a small angle, is obliquely guided into the user's eyes in a direction opposite the expected direction. In this time, the user, in addition to seeing the original expected image, may also see an unexpected image of a mirror image. Therefore, the user may easily see existence of a ghost image in an image during use of the HMD, and see that the image quality of the HMD is not good.

The information disclosed in this Background section is only for enhancement of understanding of the background of the described technology and therefore it may contain information that does not form the prior art that is already known to a person of ordinary skill in the art. Further, the information disclosed in the Background section does not mean that one or more problems to be resolved by one or more embodiments of the invention were acknowledged by a person of ordinary skill in the art.

SUMMARY OF THE INVENTION

The invention provides an optical system. The optical system may transmit an image light and expand the image light in two directions, and when applied to a head-mounted display device, the head-mounted display device may not produce a ghost image and has a good image quality in the case of having a light weight and a small volume.

The invention provides a head-mounted display device, including the optical system. The head-mounted display device may not produce a ghost image and has a good image quality.

The invention provides a head-mounted display device, including the optical waveguide device, and having a good image quality in the case of having a light weight and a small volume.

Other objectives and advantages of the invention may be further understood from the technical features disclosed in the invention.

To achieve one, some or all of the objectives or other objectives, an embodiment of the invention proposes an optical system adapted to a head-mounted display. The optical system receives an image light. The optical system includes a first optical waveguide device and a second optical waveguide device. The first optical waveguide device includes a first light entering surface, a first light exiting surface and at least one first beam splitter. The image light enters the first optical waveguide device via the first light entering surface. The first light exiting surface connects to the first light entering surface, and the image light exits from the first optical waveguide device via the first light exiting surface. The at least one first beam splitter is disposed in the first optical waveguide device. The second optical waveguide device is disposed beside the first optical waveguide device, and the second optical waveguide device includes a first surface, a second surface and at least one second beam splitter. One part of the first surface is a second light entering surface facing the first light exiting surface, and the other part of the first surface is a second light exiting surface. The image light enters the second optical waveguide device via the second light entering surface and exits from the second optical waveguide device via the second light exiting surface. The second surface is opposite to the first surface. The second surface has a plurality of optical microstructures, and each of the optical microstructures includes a reflecting surface. In addition, the at least one second beam splitter is disposed in the second optical waveguide device. A projection device is configured to provide an image light.

Based on the above, the embodiments of the invention at least have one of the following advantages or effects. The optical system of the head-mounted display device of the embodiments of the invention includes a first optical waveguide device and a second optical waveguide device, and the second optical waveguide device is disposed beside the first optical waveguide device. The first optical waveguide device includes at least one first beam splitter, and the second optical waveguide device includes at least one second beam splitter. One part of the first surface of the second optical waveguide device is a second light entering surface, and the other part of the first surface is a second light exiting surface. The image light, after exiting from the first optical waveguide device, enters the second optical waveguide device via the second light entering surface, and exits from the second optical waveguide device via the second light exiting surface. In addition, the second optical waveguide device includes a second surface opposite to the first surface, the second surface has a plurality of optical microstructures, and each of the optical microstructures includes a reflecting surface. Therefore, the image light can, after travelling to the first optical waveguide device, travel to the second optical waveguide device by means of reflection of the optical microstructures, so that the optical system can transmit the image light and expand the image light in two directions by means of the first optical waveguide device and the second optical waveguide device, and the first optical waveguide device and the second optical waveguide device may be designed to be stacked with each other. In addition, It can be designed the first optical waveguide device stacked with the second optical waveguide device to a suitable size, to make the image light travel to the first beam splitter before total internal reflection in the first optical waveguide device, avoiding that the image light produces total internal reflection in the first optical waveguide device to form an unexpected incident angle too large for the first beam splitter. Therefore, the image light may be reflected or transmitted at the first beam splitter in an expected manner, so that the head-mounted display device may not produce a ghost image and have a good iamge quality in the case of having a light weight and a small volume.

Other objectives, features and advantages of the invention will be further understood from the further technological features disclosed by the embodiments of the invention wherein there are shown and described exemplary embodiments of this invention, simply by way of illustration of modes best suited to carry out the invention.

BRIEF DESCRIPTION OF THE DRAWINGS

Fig. 1A is a schematic three-dimensional diagram of a head-mounted display device according to an embodiment of the invention.

Fig. 1B is a schematic cross-sectional diagram of an optical system according to the embodiment of Fig. 1A.

Fig. 1C is a schematic enlarged diagram of a part of the optical system of Fig. 1B.

Fig. 1D to Fig. 1G are schematic diagrams of a light path on which the first optical waveguide device transfers a part of the image light in the embodiment of Fig. 1A.

Fig. 1H to Fig. 1J are schematic diagrams of a light path on which the second optical waveguide device transfers a part of the image light in the embodiment of Fig. 1A.

Fig. 2A is a schematic diagram of a light path on which an optical waveguide device of an optical system transfers a part of the image light according to a comparative embodiment.

Fig. 2B is a simulated diagram of light intensity distribution of an observation area according to the comparative embodiment of Fig. 2A.

Fig. 3 is a plot of reflectivity of a beam splitter for an image light vs. an incident angle of the image light.

Fig. 4A to Fig. 4C are schematic cross-sectional diagrams of a plurality of optical microstructures on a second optical waveguide device in some related embodiments of the invention.

Fig. 5 is a schematic cross-sectional diagram of a head-mounted display device according to another embodiment of the invention.

Fig. 6 is a schematic diagram of a light path on which a head-mounted display device transmits an image light according to a further embodiment of the invention.

DESCRIPTION OF THE EMBODIMENTS

In the following detailed description of the preferred embodiments, reference is made to the accompanying drawings which form a part hereof, and in which are shown by way of illustration specific embodiments in which the invention may be practiced. In this regard, directional terminology, such as "top," "bottom," "front," "back," etc., is used with reference to the orientation of the Figure(s) being described. The components of the invention can be positioned in a number of different orientations. As such, the directional terminology is used for purposes of illustration and is in no way limiting. On the other hand, the drawings are only schematic and the sizes of components may be exaggerated for clarity. It is to be understood that other embodiments may be utilized and structural changes may be made without departing from the scope of the invention. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted" and variations thereof herein are used broadly and encompass direct and indirect connections, couplings, and mountings. Similarly, the terms "facing," "faces" and variations thereof herein are used broadly and encompass direct and indirect facing, and "adjacent to" and variations thereof herein are used broadly and encompass directly and indirectly "adjacent to". Therefore, the description of "A" component facing "B" component herein may contain the situations that "A" component directly faces "B" component or one or more additional components are between "A" component and "B" component. Also, the description of "A" component "adjacent to" "B" component herein may contain the situations that "A" component is directly "adjacent to" "B" component or one or more additional components are between "A" component and "B" component. Accordingly, the drawings and descriptions will be regarded as illustrative in nature and not as restrictive.

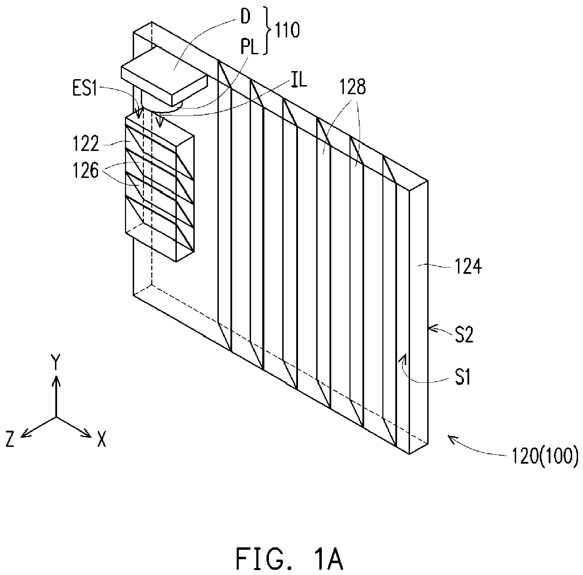

Fig. 1A is a schematic three-dimensional diagram of a head-mounted display device according to an embodiment of the invention. Referring to Fig. 1A, in the embodiment, the head-mounted display device 100 includes a projection device 110 and an optical system 120. The optical system 120 includes a first optical waveguide device 122 and a second optical waveguide device 124, and the second optical waveguide device 124 is disposed beside the first optical waveguide device 122. The first optical waveguide device 122 includes a plurality of first beam splitters 126 disposed therein, and the first beam splitters 126 are parallel to each other and spaced apart (that is, there is a gap between two adjacent first beam splitters 126). The second optical waveguide device 124 includes a plurality of second beam splitters 128 disposed therein, and the second beam splitters 128 are parallel to each other and spaced apart (that is, there is a gap between two adjacent second beam splitters 128). In some embodiments, the first optical waveguide device 122 may also only include a first beam splitter 126, and the second optical waveguide device 124 may only include a second beam splitter 128, which is not limited thereto.

In the embodiment, the projection device 110 includes a display D and a lens module PL, wherein the lens number of the lens module PL is not limited, and is determined according to design. The projection device 110 is configured to provide an image light IL, and the optical system 120 is configured to receive the image light IL from the projection device 110. Specifically, the display D of the projection device 110 provides the image light IL, and the image light IL is transferred to the first optical waveguide device 122 through the lens module PL. In addition, the first optical waveguide device 122 includes a first light entering surface ES1, and the image light IL enters the first optical waveguide device 122 via the first light entering surface ES 1. In the embodiment, the head-mounted display device 100, for example, is in a space constructed by a first axis X, a second axis Y and a third axis Z, wherein the direction of the first axis X is parallel to the direction in which the second beam splitters 128 are arranged, while the direction of the second axis Y is parallel to the direction in which the first beam splitters 126 are arranged. In addition, the direction of the first axis X is perpendicular to the direction of the second axis Y, and the direction of the third axis Z is perpendicular to the direction of the first axis X and also perpendicular to the direction of the second axis Y.

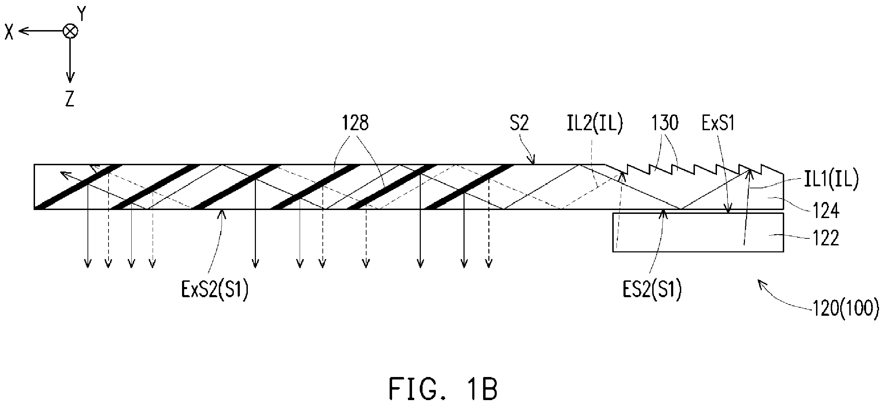

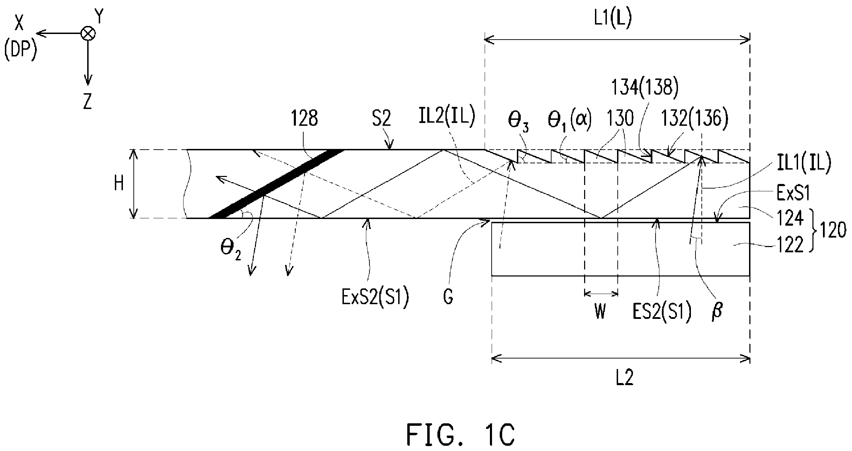

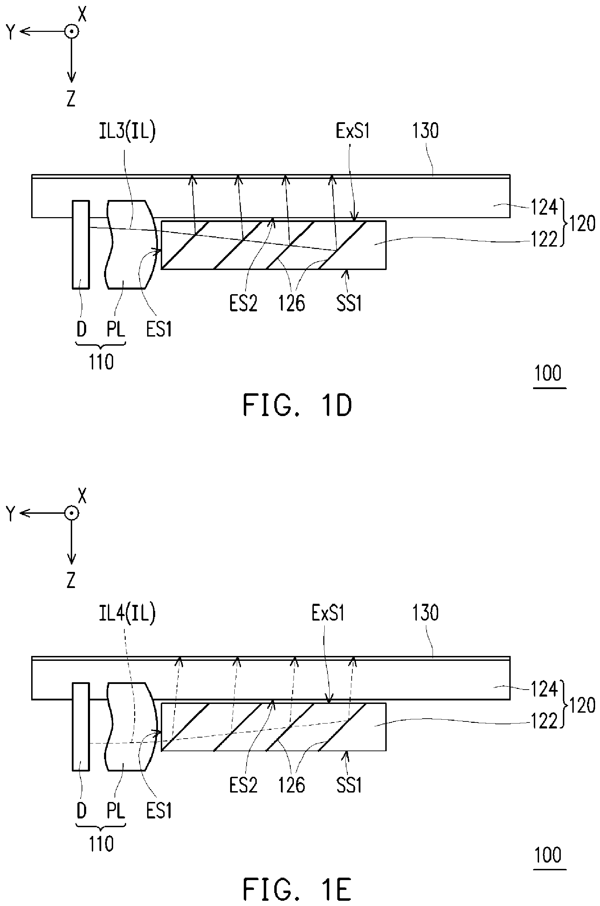

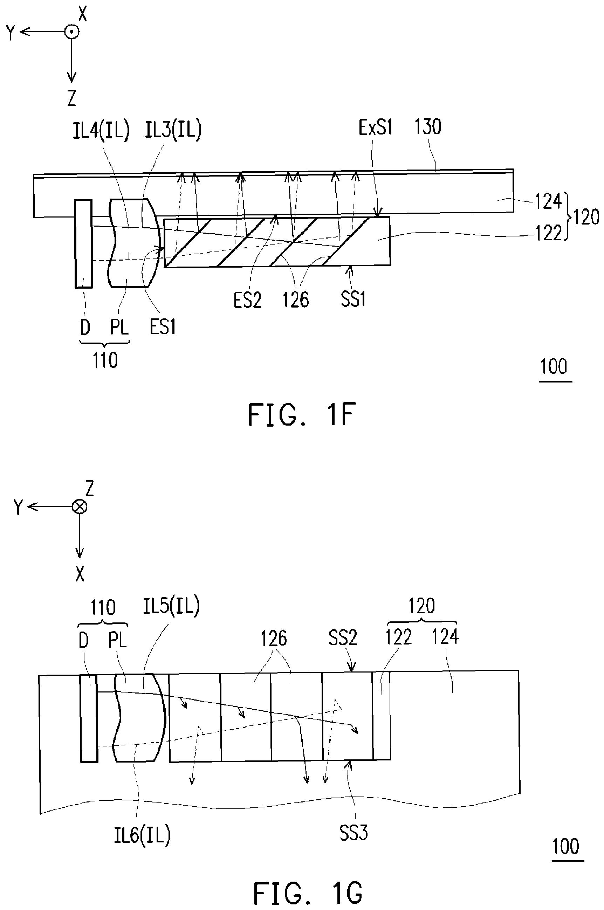

Fig. 1B is a schematic cross-sectional diagram of an optical system according to the embodiment of Fig. 1A, Fig. 1C is a schematic enlarged diagram of a part of the optical system of Fig. 1B, and Fig. 1D to Fig. 1G are schematic diagrams of a light path on which the first optical waveguide device transfers a part of the image light in the embodiment of Fig. 1A. It should be noted that Fig. 1B and Fig. 1C illustrate image light IL1 and image light IL2 of the image light IL to clearly indicate the light path of the light in the optical system by means of string-like light beams. In addition, Fig. 1D and Fig. 1E illustrate image light IL3 and image light IL4 at edges of the image light IL respectively, and Fig. 1F superimposes the image light IL3 of Fig. 1D and the image light IL4 of Fig. 1E, to clearly present the edge of the image light IL in a YZ plane (i.e., a plane formed by the second axis Y and the third axis Z) through the image light IL3 and the image light IL4. In addition, Fig. 1G illustrates image light IL5 and image light IL6 at edges of the image light IL, to clearly present the edge of the image light IL in an XY plane (i.e., a plane formed by the first axis X and the second axis Y).

Please refer to Fig. 1A and Fig. 1F at the same time, the first optical waveguide device 122 further includes a first light exiting surface ExS1, and the first light exiting surface ExS1 connects to the first light entering surface ES1. In addition, referring to Fig. 1A and Fig. 1B at the same time, the second optical waveguide device 124 includes a first surface S1 and a second surface S2. One part of the first surface S1 is a second light entering surface ES2 facing the first light exiting surface ExS1 of the first optical waveguide device 122, and the other part of the first surface S1 is a second light exiting surface ExS2. Specifically, referring to Fig. 1F, a part of the image light IL entering the first optical waveguide device 122 is adapted to be reflected by the first beam splitters 126, and exits from the first optical waveguide device 122 via the first light exiting surface ExS1. Next, the image light IL exiting from the first optical waveguide device 122 is adapted to enter the second optical waveguide device 124 via the second light entering surface ES2. In addition, referring to Fig. 1B, a part of the image light IL entering the second optical waveguide device 124 is adapted to be reflected by the second beam splitters 128, and exits from the second optical waveguide device 124 via the second light exiting surface ExS2. Specifically, the image light IL is adapted to travel in the second optical waveguide device 124 by total internal reflection.

Specifically, referring to Fig. 1C, the second surface S2 of the second optical waveguide device 124 is opposite to the first surface S1, and the second surface S2 has a plurality of optical microstructures 130. Each of the optical microstructures 130 includes a reflecting surface 132 and a connecting surface 134 connecting the reflecting surface 132, and the reflecting surfaces 132 are adapted to reflect the image light IL entering the second optical waveguide device 124 via the second light entering surface ES2, to cause the image light IL reflected by the reflecting surfaces 132 to be transferred to the second beam splitters 128. The image light IL may be partially reflected and partially transmitted by the second beam splitters 128. Specifically, as the optical microstructures 130 have the reflecting surfaces 132 obliquely disposed, even if the first optical waveguide device 122 and the second optical waveguide device 124 are designed to be stacked with each other, the image light II exiting from the first optical waveguide device 122 may be transferred into the second optical waveguide device 124 by means of reflection of the reflecting surfaces 132.

In the embodiment, each of the optical microstructures 130 further includes a light reflecting layer 136 and a light absorbing layer 138. The light reflecting layer 136 is disposed on the reflecting surface 132, and the light absorbing layer 138 is disposed on the connecting surface 134. The light reflecting layer 136, for example, is a reflective coating, and can reflect the image light IL more effectively. In addition, the light absorbing layer 138, for example, is an absorbing coating or a dark ink, and can make a part of the image light IL entering the second optical waveguide device 124 in a deviated travel direction absorbed by the light absorbing layer 138, to make the image light IL reflected by the reflecting surface 132 substantially travel in the second optical waveguide device 124 at a fixed angle. Accordingly, when the image light IL travels to the second beam splitters 128, the image light IL may be substantially incident to the second beam splitters 128 at an expected incident angle.

In the embodiment, an acute angle between reflecting surface 132 and a reference plane (presented with dotted lines) of FIG.1C is equal to an acute angle between the second beam splitter 128 and the second light exiting surface ExS2, wherein the reference plane is parallel to the second light exiting surface ExS2. That is to say, the acute angle between the reflecting surface 132 and the reference plane is an angle $\theta_1$, the acute angle between the second beam splitter 128 and the second light exiting surface ExS2 is an angle $\theta_2$, and the angle $\theta_1$ is equal to the angle $\theta_2$. However, in some embodiments, the angle $\theta_1$ may not be equal to the angle $\theta_2$, and the invention does not limit the degree of the angle $\theta_1$ and the angle $\theta_2$ and whether the angle $\theta_1$ is equal to the angle $\theta_2$. In addition, the connecting surface 134 and the reference plane have an angle $\theta_3$, and the angle $\theta_3$ is greater than 0 degree and the angle $\theta_3$ is less than or equal to 90 degrees. Specifically, the optical microstructures 130 may be a tight triangle (e.g., in a situation that the angle $\theta_3$ is equal to 90 degrees), an isosceles triangle (e.g., in a situation that the angle $\theta_3$ is less than 90 degrees and the angle $\theta_3$ is equal to the angle $\theta_1$) or in other shapes. In addition, the width W of each optical microstructure 130 may, for example, fall within the range of 100 $\mu$m to 1000 $\mu$m, and the invention does not limit the shape and size of the optical microstructures 130. In addition to this, the optical microstructures 130 may be designed as convex optical microstructures or concave optical microstructures according to actual demands. For example, the convex optical microstructures may be manufactured by a deposition process, while the concave optical microstructures may be manufactured by an etching process, but the invention is not limited thereto.

In addition, referring to Fig. 1D, in the embodiment, the first optical waveguide device 122 further includes a first side surface SS1 connecting the first light entering surface ES1, and the first side surface SS1 is parallel to the first light exiting surface ExS1. The first beam splitters 126 are disposed between the first side surface SS1 and the first light exiting surface ExS1, and the first beam splitters 126 are not parallel to the first light entering surface ES1 (not parallel to the first side surface SS1 either). Next, referring to Fig. 1B, in the embodiment, the second surface S2 of the second optical waveguide device 124 is parallel to the second light exiting surface ExS2. The second beam splitter 128 are disposed between the second surface S2 and the second light exiting surface ExS2, and the second beam splitter 128 are not parallel to the second light exiting surface ExS2 (not parallel to the second surface S2 either). In addition, the angles between the first beam splitters 126 and the first light exiting surface ExS1 and the angles between the second beam splitters 128 and the second light exiting surface ExS2, for example, fall within 25 degrees to 40 degrees, and preferably, are 30 degrees. In the other embodiment, the angles between the first beam splitters 126 and the first light exiting surface ExS1 may be with different degrees. The angles between the second beam splitters 128 and the second light exiting surface ExS2 may be with different degrees.

Specifically, when the configuration angles of the first beam splitters 126 (or the second beam splitters 128) increases, the first beam splitters 126 (or the second beam splitters 128) may be disposed densely, and can achieve good light uniformity of light emitted by the optical system 120. It should be noted that the first beam splitters 126 are projected on the first light exiting surface ExS1 along the third axis Z, and the first beam splitters 126 may not overlap with each other; the second beam splitters 128 are projected on the second light exiting surface ExS2 along the third axis Z, and the second beam splitters 128 may not overlap with each other. In addition, the first optical waveguide device 122 (or the second optical waveguide device 124) may be set to be relatively thin to be sufficient to guide the image light IL, thus facilitating the whole head-mounted display device 10 to be lighter and thinner.

Referring to Fig. 1C, specifically, the second light entering surface ES2 of the second optical waveguide device 124 is parallel to the first light exiting surface ExS1 of the first optical waveguide device 122, and there is a gap G (as depicted in Fig. 1C) between the second light entering surface ES2 and the first light exiting surface ExS1. The width of the gap G, for example, falls between 2 $\mu$m and 12 $\mu$m, and preferably, falls between 3 $\mu$m and 10 $\mu$m. However, in other embodiments, the width of the gap G may also be other values, and the invention is not limited thereto. In another embodiment, the first optical waveguide device 122 and the second optical waveguide device 124, for example, are bonded with optical cement. The optical cement, for example, is coated near the edge of the first light exiting surface ExS1 or the second light entering surface ES2, or coated to a corner of the first light exiting surface ExS1 or the second light entering surface ES2. When the first light exiting surface ExS1 and the second light entering surface ES2 are jointed and bonded, the first light exiting surface ExS1 and the second light entering surface ES2 are partially contact-bonded instead of being totally contact-bonded, that is, there is a gap G therebetween. In another embodiment, the first light exiting surface ExS1 and the second light entering surface ES2 are bonded by total contact with optical cement, to fix the first optical waveguide device 122 and the second optical waveguide device 124. In addition, in some embodiments, relative positions of the first optical waveguide device 122 and the second optical waveguide device 124 may also be fixed through a mechanism device, for example, a fixed jig, to make the first light exiting surface ExS1 and the second light entering surface ES2 have a gap G therebetween, but the invention is not limited thereto. Specifically, the gap G, for example, is filled with air. However, in some embodiments, the gap G may also be filled with a transparent material, for example, a transparent material whose refractivity is less than that of the first optical waveguide device 122 and the second optical waveguide device 124, but the invention is not limited thereto.

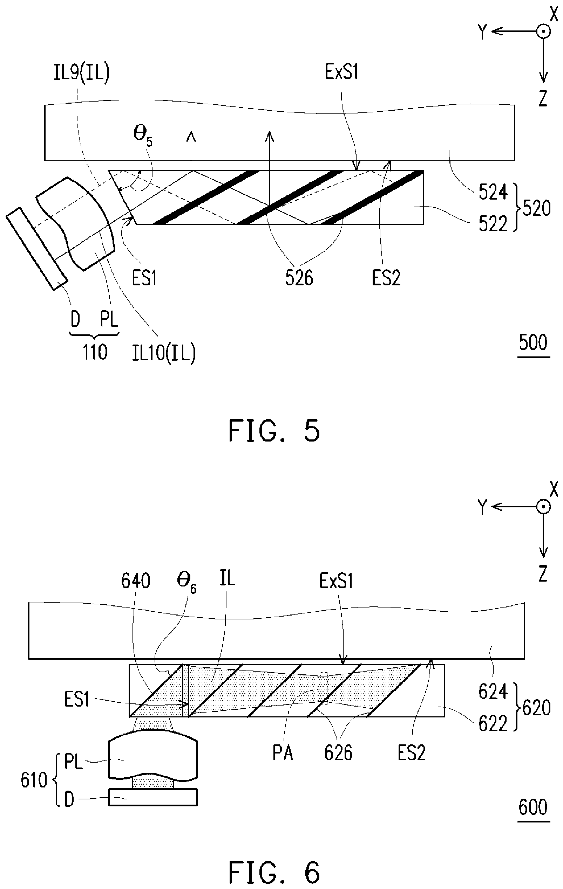

Referring to Fig. 1D to Fig. 1F, in the embodiment, an angel between the first light entering surface ES1 and the first light exiting surface ExS1 of the first optical waveguide device 122 may be less than or equal to 90 degrees. Specifically, the first light entering surface ES1 and the first light exiting surface ExS1 depicted in Fig. 1D are perpendicular to each other, that is to say, an angel between the first light entering surface ES1 and the first light exiting surface ExS1 is equal to 90 degrees. However, in other embodiments, the first light entering surface ES1 may also be inclined relative to the first light exiting surface ExS1, that is to say, the angle between the first light entering surface ES1 and the first light exiting surface ExS1 is less than 90 degrees, which is described in detail in the following paragraphs and can make reference to Fig. 5, but the invention is not limited thereto. Specifically, the image light IL enters the first optical waveguide device 122 via the first light entering surface ES1. Next, the image light IL is adapted to travel between the first side surface SS1 and the first light exiting surface ExS1. Referring to Fig. 1D and Fig. 1E, in the embodiment, the image light IL3 and the image light IL4 represent the edge lights of the image light IL, before reaching the first side surface SS1 and the first light exiting surface ExS1, are reflected by the first beam splitters 126 and exit from the first optical waveguide device 122 via the first light exiting surface ExS1. In other words, at least part of the image light IL, after entering the first optical waveguide device 122 via the first light entering surface ES1, in a situation that it has not yet been expanded to the first side surface SS1 and the first light exiting surface ExS1 on the YZ plane, is directly reflected by the first beam splitters 126 to be transferred to the second optical waveguide device 124.

Next, referring to Fig. 1G, in the embodiment, the first optical waveguide device 122 further includes a second side surface SS2 and a third side surface SS3. The second side surface SS2 connects to the first side surface SS1 and the first light exiting surface ExS1, the third side surface SS3 also connects to the first side surface SS1 and the first light exiting surface ExS1, and the third side surface SS3 is parallel to the second side surface SS2. Specifically, when the image light IL travels between the first side surface SS1 and the first light exiting surface ExS1, the image light IL may also travel between the second side surface SS2 and the third side surface SS3 in the direction of the first axis X. In the embodiment, the image light IL5 and the image light IL6 are the edge light of the image light IL, before reaching the second side surface SS2 and the third side surface SS3, are reflected by the first beam splitters 126 and exit from the first optical waveguide device 122. In other embodiment, the image light IL5 and the image light IL6 may exit from the first optical waveguide device 122 via the first light exiting surface. Specifically, in the embodiment, the first optical waveguide device 122 stacked with the second optical waveguide device 124 has a suitable width in the direction of the first axis X, so that at least part of the image light IL, after entering the first optical waveguide device 122 via the first light entering surface ES1, in a situation that it has not yet been expanded to the second side surface SS2 and the third side surface SS3, is directly reflected by the first beam splitters 126 to be transferred to the second optical waveguide device 124.

In the embodiment, one part of the image light IL (e.g., the image light IL3, IL4, IL5, IL6), after being reflected by at least one of the first beam splitters 126, exits from the first optical waveguide device 122 via the first light exiting surface ExS1. Specifically, at least part of the first beam splitters 126 reflect one part of the image light IL, and the other part of the image light IL transmits the first beam splitters 126.

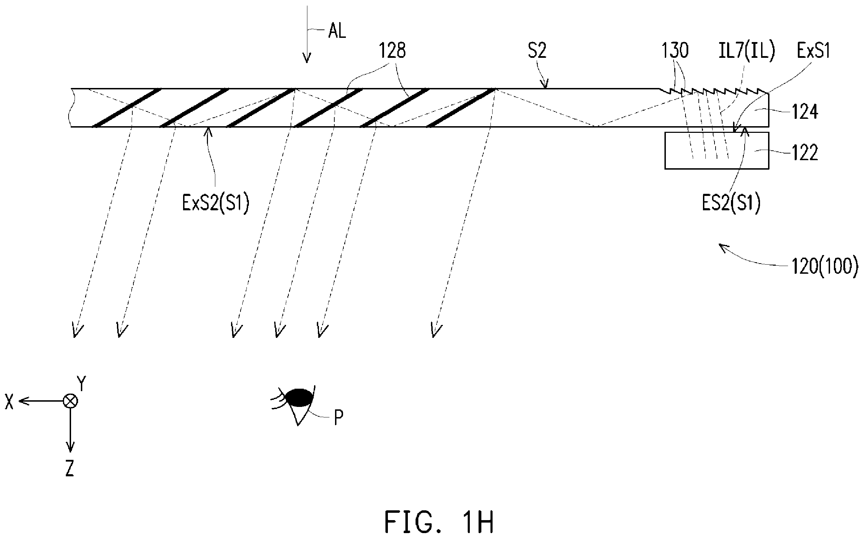

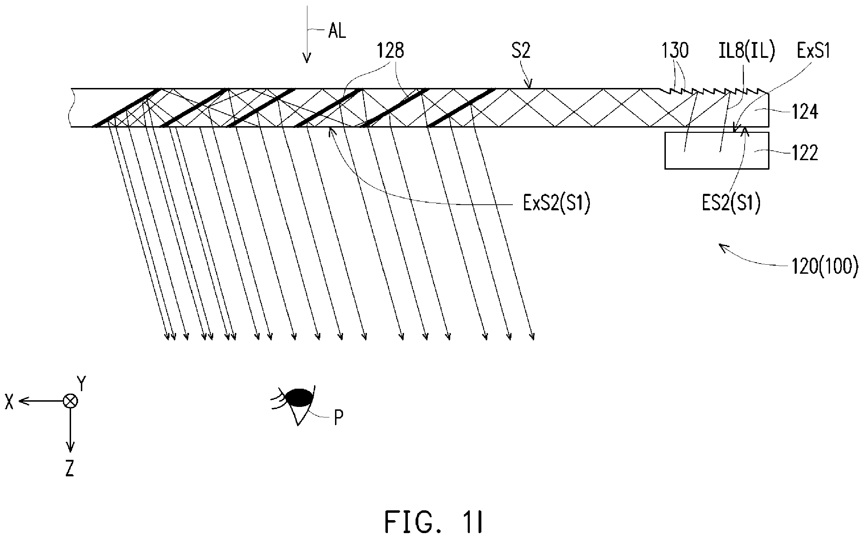

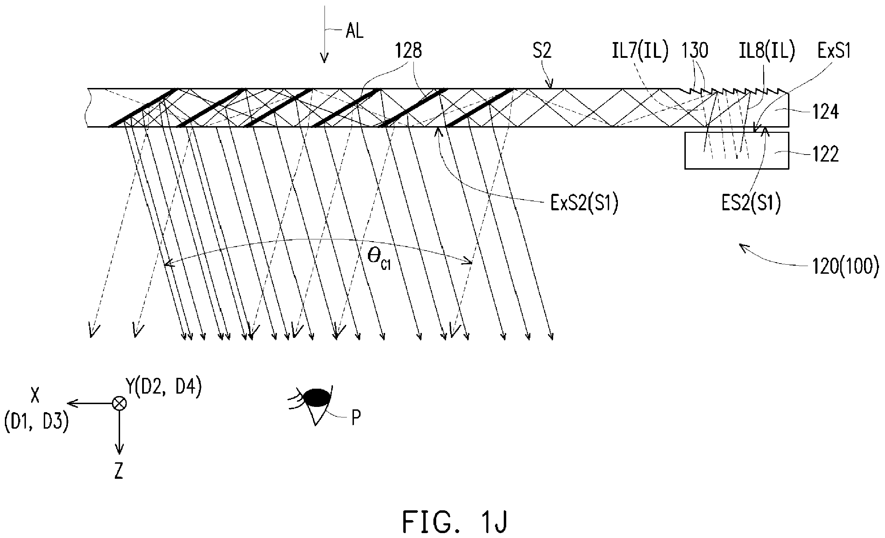

Fig. 1H to Fig. 1J are schematic diagrams of a light path on which the second optical waveguide device transfers a part of the image light in the embodiment of Fig. 1A. Specifically, Fig. 1H and Fig. 1I illustrate some image light IL7 and image light IL8 of the image light IL respectively, and Fig. 1J superimposes the image light IL7 of Fig. 1H and the image light IL8 of Fig. 1I, to clearly present the edge of the image light IL on the XZ plane (the plane formed by the first axis X and the third axis Z) through the image light IL7 and the image light IL8. Referring to Fig. 1H and Fig. 1I, in the embodiment, a part of the image light IL exiting from the first optical waveguide device 122, for example, the image light IL7 and the image light IL8, enters the second optical waveguide device 124 via the second light entering surface ES2. Next, the image light IL7 and the image light IL8 are reflected by the optical microstructures 130 to travel between the second surface S2 and the second light exiting surface ExS2 of the second optical waveguide device 124. Most incident angles incident on the second surface S2 and the second light exiting surface ExS2 by at least part of the image light IL (e.g., the image light IL7 and the image light IL8) reflected by the optical microstructures 130 may be greater than a critical angle by total internal reflection, which is then transferred to the second beam splitters 128 by total internal reflection.

As shown in Fig. 1H and Fig. 1I, in the embodiment, a part of the image light IL (e.g., the image light IL7 and the image light IL8), after being reflected by at least one of the second beam splitters 128, exits from the second optical waveguide device 124 via one of the second surface S2 and the second light exiting surface ExS2. Specifically, at least part of the second beam splitters 128 reflect one part of the image light IL, and the other part of the image light IL transmits the second beam splitters 128. In addition, the image light IL reflected by the second beam splitters 128, for example, exits from the second optical waveguide device 120 via the second light exiting surface ExS2. The image light IL exiting from the second optical waveguide device 124 is adapted to enter a pupil P. In the embodiment, the pupil P, for example, is a user's eye.

Referring to Fig. 1J, in the embodiment, the image light IL before entering the first optical waveguide device 122 has a first entrance pupil opening angle (not shown) in a first direction D1 and has a second entrance pupil opening angle (not shown) in a second direction D2. In addition, the image light IL exiting from the second optical waveguide device 124 and entering the pupil P has a first light convergence angle $\theta_{c1}$ (as shown in Fig. 1J) in a third direction D3, and has a second light convergence angle (not shown) in a fourth direction D4. In the embodiment, the first direction D1 is perpendicular to the second direction D2, and the third direction D3 is perpendicular to the fourth direction D4. Specifically, the first direction D1, the third direction D3 and the first axis X, for example, are parallel to each other, and the second direction D2, the fourth direction D4 and the second axis Y, for example, are parallel to each other. Specifically, in a process that the light image IL travels in the first optical waveguide device 122, the second entrance pupil opening angle and the second light convergence angle of the image light IL may not change substantially, and in addition, in a process that the image light IL travels in the second optical waveguide device 124, the first entrance pupil opening angle and the first light convergence angle $\theta_{c1}$ of the image light IL may not change substantially. Specifically, the first entrance pupil opening angle is equal to the first light convergence angle $\theta_{c1}$, and the second entrance pupil opening angle is equal to the second light convergence angle. The angles of the first light convergence angle $\theta_{c1}$ and the second light convergence angle depend on FOV of the lens module PL. For example, if the manufacturer designs the FOV of the lens module PL as 40 degrees, the angles of the first light convergence angle $\theta_{c1}$ and the second light convergence angle are 34 degrees and 20 degrees, but are not limited thereto.

In the embodiment, the first optical waveguide device 122 and the second optical waveguide device 124, for example, are made of a light-transmitting material (for example, glass, acryl or other suitable materials), to enable an ambient light AL from the outside to transmit the second optical waveguide device 124 or the first optical waveguide device 122. For example, the image light IL, after being transferred by the first optical waveguide device 122 and the second optical waveguide device 124, exits from the second optical waveguide device 124 via the second light exiting surface ExS2. When a user's eye, for example, is near the second light exiting surface ExS2 of the second optical waveguide device 124, the image light IL exiting from the second optical waveguide device 124 may enter the user's eye, and the ambient light AL from the outside may also transmit the second optical waveguide device 124 to enter the user's eye. Therefore, when the head-mounted display device 100 is placed in front of the user's eye and the image light IL and the ambient light AL enter the user's eye, the user can see a display image (not shown) corresponding to the image light IL, and at the same time, the user may also see an external image (not shown) corresponding to the ambient light AL, to achieve an AR display effect. In the embodiment, the display D, for example, may be a liquid crystal display (LCD), a plasma display, an OLED display, an electrowetting display (EWD), an electrophoretic display (EPD), an electrochromic display (ECD), a Digital Micromirror Device (DMD) or other applicable displays, and the invention is not limited thereto.

In the embodiment, the reflectivity of the first beam splitters 126 gradually increases along a direction away via the first light entering surface ES1 and parallel to the first side surface SS1. In addition, the transmittance of the first beam splitters 126 gradually decreases along the direction away via the first light entering surface ES1 and parallel to the first side surface SS1. Specifically, the reflectivity of the first beam splitters 126 gradually increases along a direction opposite the direction of the second axis Y, and the transmittance of the first beam splitters 126 gradually decreases along the direction opposite the direction of the second axis Y. In addition to this, in the embodiment, the reflectivity of the second beam splitters 128 gradually increases along a direction away from the first optical waveguide device 122 and parallel to the second surface S2. In addition, the transmittance of the second beam splitters 128 gradually decreases along the direction away from the first optical waveguide device 122 and parallel to the second surface S2. Specifically, the reflectivity of the second beam splitters 128 gradually increases along the direction of the first axis X, and the transmittance of the second beam splitters 128 gradually decreases along the direction of the first axis X. By means of proper gradient design of the reflectivity and the transmittance of the first beam splitters 126 and the second beam splitters 128, the light intensity of the image light IL gradually decreases in a process of being sequentially transferred to the first beam splitters 126 and the second beam splitters 128. The light intensity of the image light IL reflected by the first beam splitters 126 may keep consistent in the direction of the second axis Y, and the light intensity of the image light IL reflected by the second beam splitters 128 may keep consistent in the direction of the first axis X. That is to say, when the user sees the display image (not shown) corresponding to the image light IL, the light intensity of the display image seen by the user is distributed evenly, and a situation that the brightness at one side is relatively low or high may not occur.

In the embodiment, the first beam splitters 126 of the first optical waveguide device 122 are arranged at equal intervals, and the second beam splitters 128 of the second optical waveguide device 124 are also arranged at equal intervals. However, in other embodiments, the first beam splitters 126 and the second beam splitters 128 may be designed to be arranged at unequal intervals according to actual optical demands, and the invention is not limited thereto. Specifically, in the embodiment, the image light IL, in the process of traveling to the first optical waveguide device 122 and the second optical waveguide device 124, can be expanded in two directions (the direction of the first axis X and the direction of the second axis Y) by means of the first beam splitters 126 and the second beam splitters 128, so that the image light IL can be guided into the user's eye in two directions.

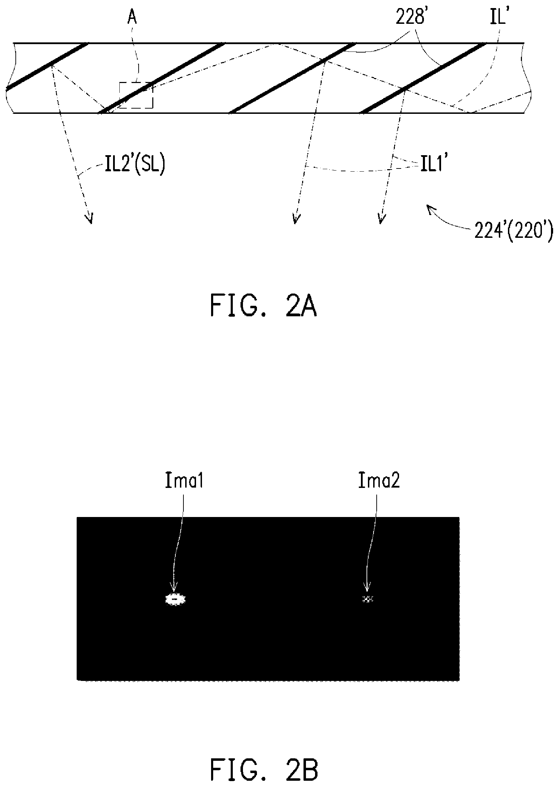

Fig. 2A is a schematic diagram of a light path on which an optical waveguide device of an optical system transfers a part of the image light according to a comparative embodiment. Referring to Fig. 2A, in the comparative embodiment, image light IL' travels in an optical waveguide device 224' of an optical system 220' by total internal reflection. The optical waveguide device 224', for example, are a plurality of beam splitters 228' spaced apart, and the beam splitters 228' are similar to the first beam splitters 126 or the second beam splitters 128 of the embodiment of the invention in Fig. 1A to Fig. 1J. The surfaces of the beam splitters 228' have coating films, and can reflect a light with a small incident angle and transmit a light with a large incident angle.

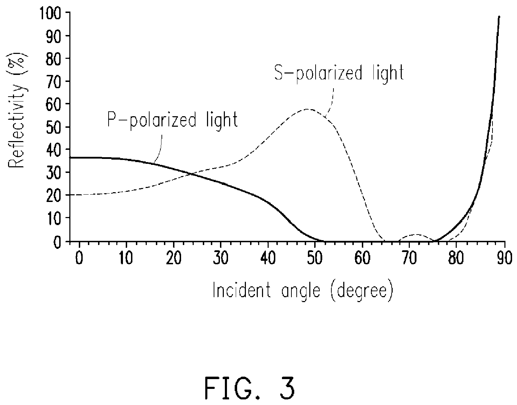

Fig. 3 is a plot of reflectivity of a beam splitter for an image light vs. an incident angle of the image light, please first refer to Fig. 3. Specifically, two curves "S-polarized light" and "P-polarized light" illustrated in Fig. 3 respectively indicate reflectivity of the beam splitters vs. different incident angles of the image light when the image light having an S-polarized direction and the image light having a P-polarized direction are incident to the beam splitters. The "reflectivity" marked on the vertical axis of Fig. 3 indicates the above reflectivity, and the unit is percentage; the "incident angle" marked on the horizontal axis indicates the above incident angles, and the unit is degree. Generally, surface coating of the beam splitters can cause the beam splitters to be selective about light with different incident angles. When a plurality of beam splitters expand light to enable the user to see an expected image, the surface coating of the beam splitters may be designed to reflect light incident at a small incident angle and make light incident at a large incident angle transmit. Therefore, the image light IL' reflected by the beam splitters 228', that is, image light IL1', may be generally slightly obliquely guided into the user's eye in an expected direction, thus causing the user to see an expected image.

Then, in actual use, the surface coating of the beam splitters have limitations. As shown in Fig. 3, the surface coating of the beam splitters reflects light incident at a too large incident angle (e.g., when the incident angle is over 80 degrees, the reflectivity increases) to generate unexpected reflected light. Referring to Fig. 2A, when the image light IL' travels in the optical waveguide device 224' of the optical system 220' by total internal reflection, a part of the image light IL' transferred to the beam splitters 228' via total internal reflection may be incident to the beam splitters 228' at a too large incident angle. At this point, a part of the image light IL', for example, image light IL2', may produce unexpected reflection (e.g., the image light IL2' produces unexpected reflection in an area A of Fig. 2A) on the beam splitters 228'. The unexpected reflected image light IL2' may continue traveling in the optical waveguide device 224', and in a situation of being subsequently incident to the beam splitters 228' at a small angle, is reflected by the beam splitters 228', to form unexpected light SL. The unexpected light SL may be obliquely guided into the user's eye in a direction opposite the expected direction.

Fig. 2B is a simulated diagram of light intensity distribution of an observation area according to the comparative embodiment of Fig. 2A. Referring to Fig. 2B, when the image light IL1' and the unexpected light SL (the image light IL2') enter the user's eye at the same time, the user, in addition to seeing an expected display image Ima1 corresponding to the image light IL1', may also see an unexpected display image Ima2 corresponding to the unexpected light SL. Therefore, the user may easily sense existence of a ghost image in the display image in the process of using the HMD of the comparative embodiment, and senses that the display quality of the HMD is not good.

Relatively, referring to Fig. 1G, in the embodiment, the first optical waveguide device 122 stacked with the second optical waveguide device 124 has a suitable width in the direction of the first axis X, so that at least part of the image light IL may not be totally reflected in the first optical waveguide device 122 on the XY plane. Specifically, the image light IL, before being totally reflected in the first optical waveguide device 122, may travel to the first beam splitters 126. Therefore, the image light IL may not be totally reflected in the first optical waveguide device 122 to form a too large and unexpected incident angle relative to the first beam splitters 126, so that the image light IL may be reflected or transmit on the first beam splitters 126 in an expected manner. Therefore, the head-mounted display device 100 of the embodiment of the invention may not produce a ghost image and have a good image display quality in the case of having a light weight and a small volume.

Referring to Fig. 1C, in the embodiment, the image light IL reflected by the reflecting surfaces 132 of the optical microstructures 130 of the second optical waveguide device 124 travels in the second optical waveguide device 124 along a travel direction DP, wherein the travel direction DP, for example, is parallel to the first axis X. Specifically, the optical microstructures 130 have a width L along the travel direction DP in an area where the second surface S2 is located. In addition, the second light exiting surface ExS2 and the second surface S2 have a thickness H therebetween, and there is a first angle $\alpha$ between the reflecting surface 132 and a reference plane (presented with dotted lines) on the figure, wherein the reference plane is parallel to the second light exiting surface ExS2. In addition, the image light IL enters the second optical waveguide device 124 via the second light entering surface ES2, and there is a second angle $\beta$ between the image light IL and a vertical line perpendicular to the second light entering surface ES2. In this embodiment, the optical system 120, for example, may satisfy the following relation:

$$H = \frac{L}{[2 \times \tan(2\alpha - \beta)]} \qquad (1)$$

According to the above relation (1), for example, when the width L may be 10 mm, the first angle $\alpha$ may be 30 degrees, and the second angle $\beta$ may be 20 degrees, the thickness H may be 5.95 mm. Relatively, in the same condition, if the second surface S2 of the second optical waveguide device 124 is designed to an inclined reflecting surface instead of a plurality of optical microstructures 130 having reflecting surfaces 132, the second optical waveguide device 124, for example, has to have a thickness of 8.84 mm, and then can smoothly guide the image light IL from the first optical waveguide device 122 to transmit it in the second optical waveguide device 124. Therefore, in the embodiment of the invention, the second optical waveguide device 124 having the optical microstructures 130 may be thinner.

In addition, in the embodiment, the optical microstructures 130 have a first width $L_1$ (i.e., width L) along the travel direction DP in the area where the second surface S2 is located, and the first optical waveguide structure 122 has a second width $L_2$ in the travel direction DP. In this embodiment, when the width of a spot of the image light IL before being incident to the second optical waveguide structure 124 in the travel direction DP, for example, is equal to the second with L2, the optical system 120, for example, may satisfy the following relation:

$$L_1 = L_2 + 2 \times H \times \tan\left(\frac{\theta}{2}\right) \qquad (2)$$

Wherein $\theta$ indicates a field of view (FOV) of the image light IL from the first optical waveguide device 122. For example, when the second width L2 may be 8 mm and $\theta$, for example, may be 30 degrees, the thickness H may be 2.3 mm. Relatively, in the same condition, if the second surface S2 of the second optical waveguide device 124 is designed to an inclined reflecting surface instead of a plurality of optical microstructures 130 having reflecting surfaces 132, the second optical waveguide device 124, for example, has to have a thickness of 4.6 mm, and then can smoothly guide the image light IL having the value of $\theta$ and transmit it in the second optical waveguide device 124. Therefore, in the embodiment of the invention, the second optical waveguide device 124 having the optical microstructures 130 may be thinner and can make the image light IL distributed relatively uniformly.

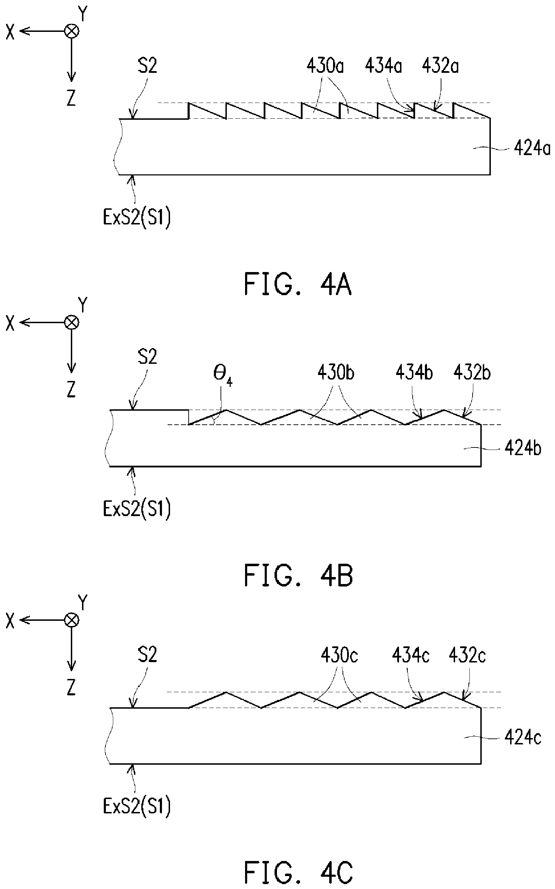

Fig. 4A to Fig. 4C are schematic cross-sectional diagrams of a plurality of optical microstructures on a second optical waveguide device in some related embodiments of the invention. The second optical waveguide devices 424a, 424b, 424c in Fig. 4A to Fig. 4C are similar to the second optical waveguide device 124 in the embodiment of Fig. 1A to Fig. 1J. Reference may be made to the second optical waveguide device 124 in the embodiment of Fig. 1A to Fig. 1J for components and related description of the second optical waveguide devices 424a, 424b, 424c, and the descriptions thereof are omitted herein. The differences between the second optical waveguide devices 424a, 424b, 424c and the second optical waveguide device 124 are as follows. Please refer to Fig. 4A, in the embodiment, a plurality of optical microstructures 430a of the second optical waveguide device 424a, for example, are a plurality of convex optical microstructures, and each optical microstructure 430a also includes a reflecting surface 432a and a connecting surface 434a. Specifically, the optical microstructures 430a, for example, are formed by bonding a microstructure thin film or plastic injection, and the invention is not limited thereto.

In addition, referring to Fig. 4B, in the embodiment, the second optical waveguide device 424b has a plurality of optical microstructures 430b, and each optical microstructure 430b also includes a reflecting surface 432b and a connecting surface 434b. There is an angle $\theta_4$ between the connecting surface 434b and the reference plane, and the angle $\theta_4$ is greater than 0 degree and the angle $\theta_4$ is less than 90 degrees. In the embodiment, the optical microstructures 430b, for example, are in a shape of an isosceles triangle. Specifically, as the connecting surfaces 434 are not perpendicular to the second light exiting surface ExS2, the optical microstructures 430b of the embodiment are easier to be made by injection molding. In addition to this, the optical microstructures 430b of the embodiment and the optical microstructures 130 of the embodiment of Fig. 1A to Fig. 1J, for example, are a plurality of concave optical microstructures. Specifically, the concave optical microstructures, for example, may be formed by cutting the whole glass or plastic injection, so that endpoints of the optical microstructures 430b are not higher than the second surface S2 of the second optical waveguide device 124, and the invention is not limited thereto.

Referring to Fig. 4C, in the embodiment, the second optical waveguide device 424c has a plurality of optical microstructures 430c, and each optical microstructure 430c also includes a reflecting surface 432c and a connecting surface 434c. Specifically, the optical microstructures 430c are similar to the optical microstructures 430b in the embodiment of Fig. 4B, but the optical microstructures 430c, for example, are similar to the form of the optical microstructures 430a of the embodiment of Fig. 4A, and are a plurality of convex optical microstructures. Reference may be made to the related description of the optical microstructures 430a and the optical microstructures 430b for the related description of the optical microstructures 430c, and the descriptions thereof are omitted herein. In other embodiment, the optical microstructures 430c may be formed in a film. The film may adhesive to the second surface S2.

Fig. 5 is a schematic cross-sectional diagram of a head-mounted display device according to another embodiment of the invention; please refer to Fig. 5. The head-mounted display device 500 of the embodiment of Fig. 5 is similar to the head-mounted display device 100 of the embodiment of Fig. 1A to Fig. 1J, reference may be made to the related description of the components of the head-mounted display device 100 for the components and the related description thereof, and the descriptions thereof are omitted herein. The differences between the head-mounted display device 500 and the head-mounted display device 100 are as follows. In the embodiment, the optical system 520 of the head-mounted display device 500 includes a first optical waveguide device 522 and a second optical waveguide device 524 stacked with each other, and an angle $\theta_5$ between a first light entering surface ES1 and a first light exiting surface ExS1 of the first optical waveguide device 522 is less than 90 degrees. Specifically, the first optical waveguide device 522, for examples, forms a wedge at one side of the first light entering surface ES1, and the first light entering surface ES1 is an inclined plane. Image light IL (a portion of the image light IL9 and the image light IL10 of the image light IL illustrated in Fig. 5) provided in a projection device 110 enters the first optical waveguide device 522 through the first light entering surface ES1, and is reflected by a plurality of first beam splitters 526 to be transferred to the second optical waveguide device 524. Specifically, in the related embodiment of the invention, the value of the angle between the first light entering surface ES1 and the first light exiting surface ExS1 may be set according to actual demands, and the invention is not limited thereto.

Fig. 6 is a schematic diagram of a light path on which a head-mounted display device transmits an image light according to a further embodiment of the invention; please refer to Fig. 6. The head-mounted display device 600 of the embodiment of Fig. 6 is similar to the head-mounted display device 100 of the embodiment of Fig. 1A to Fig. 1J, reference may be made to the related description of the components of the head-mounted display device 100 for the components and the related description thereof, and the descriptions thereof are omitted herein. The differences between the head-mounted display device 600 and the head-mounted display device 100 are as follows. In the embodiment, the optical system 620 of the head-mounted display device 600 includes a first optical waveguide device 622 and a second optical waveguide device 624 stacked with each other. In addition, the optical system 620 includes a reflecting mirror 640, disposed beside the first light entering surface ES1. The reflecting mirror 640 is adapted to reflect image light IL provided by a projection device 610, to make the image light IL enter the first optical waveguide device 622 via the first light entering surface ES1. Next, the image light IL entering the first optical waveguide device 622 may be reflected by a plurality of first beam splitters 626 again to be transferred to the second optical waveguide device 624.

Specifically, an angle $\theta_6$ between the reflecting mirror 640 and the first light exiting surface ExS1, for example, is 45 degrees. The image light IL, after being reflected by the reflecting mirror 640, may be vertically incident to the first light entering surface ES1. In addition, in this embodiment, a stop position PA, for example, is in the first optical waveguide device 622. For example, the stop position PA, for example, is located between the first beam splitters 626. The stop position PA represents a location which the converged image light with a smallest cross section in the transmission path of the image light in the first optical waveguide device 622. Therefore, the image light IL travelling to the first optical waveguide device 622 may be converged to the stop position PA. In the embodiment, by adjusting the stop position PA to which the image light IL is converged to the interior of the first optical waveguide device 622, that the image light IL is diverged too early on the XY plane to produce total internal reflection on the first light exiting surface ExS1 and the first side surface SS1 can be avoided. That is to say, the image light IL, before total internal reflection, can be guided to the second optical waveguide device 624 through the first beam splitters 626, which can thus avoid the problem that the image light IL produces total internal reflection in the first optical waveguide device 622 to cause an unexpected display image.

In summary, the embodiments of the invention have one of the following advantages or effects. The optical system of the head-mounted display device of the embodiments of the invention includes a first optical waveguide device and a second optical waveguide device, and the second optical waveguide device is disposed beside the first optical waveguide device. The first optical waveguide device includes at least one beam splitter, and the second optical waveguide device includes at least one second beam splitter. One part of a first surface of the second optical waveguide device is a second light entering surface, and the other part of the first surface is a second light exiting surface. Image light, after exiting from the first optical waveguide device, enters the second optical waveguide device via the second light entering surface, and exits from the second optical waveguide device via the second light exiting surface. In addition, the second optical waveguide device includes a second surface opposite to the first surface, the second surface has a plurality of optical microstructures, and each optical microstructure includes a reflecting surface. Therefore, the image light may travel to the second optical waveguide device by means of reflection of the optical microstructures after traveling to the first optical waveguide device, so that the optical system can transmit the image light and expand the image light in two directions by means of the first optical waveguide device and the second optical waveguide device, and the first optical waveguide device and the second optical waveguide device may be designed to be stacked with each other. In addition, the first optical waveguide device stacked with the second optical waveguide device may be designed to a suitable size, to make the image light travel to the first beam splitter before total internal reflection in the first optical waveguide device, avoiding that the image light produces total internal reflection in the first optical waveguide device to form an unexpected incident angle too large for the first beam splitter. Therefore, the image light may be reflected or transmitted at the first beam splitter in an expected manner, so that the head-mounted display device may not produce a ghost image and have a good display quality in the case of having a light weight and a small volume.

The foregoing description of the preferred embodiments of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. It is intended that the scope of the invention be defined by the claims appended hereto and their equivalents in which all terms are meant in their broadest reasonable sense unless otherwise indicated. Therefore, the term "the invention", "the present invention" or the like does not necessarily limit the claim scope to a specific embodiment, and the reference to particularly preferred exemplary embodiments of the invention does not imply a limitation on the invention, and no such limitation is to be inferred. The invention is limited only by the spirit and scope of the appended claims. Moreover, these claims may refer to use "first", "second", etc. following with noun or element. Such terms should be understood as a nomenclature and should not be construed as giving the limitation on the number of the elements modified by such nomenclature unless specific number has been given. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the invention. It should be appreciated that variations may be made in the embodiments described by persons skilled in the art without departing from the scope of the invention as defined by the following claims. Moreover, no element and component in the present disclosure is intended to be dedicated to the public regardless of whether the element or component is explicitly recited in the following claims.

**Claims**

1.    An optical system adapted to a head-mounted display device, for receiving an image light, comprising :

a first optical waveguide device comprising :

>   a first light entering surface;
>   a first light exiting surface; and
>   at least one first beam splitter disposed in the first optical waveguide device, wherein the image light exits from the first optical waveguide device via the first light exiting surface; and

a second optical waveguide device, disposed beside the first optical waveguide device, comprising :

>   a first surface;
>   a second surface opposite to the first surface; and
>   at least one second beam splitter disposed in the second optical waveguide device, wherein one part of the first surface is a second light entering surface facing the first light exiting surface, the other part of the first surface is a second light exiting surface, and the image light enters the second optical waveguide device via the second light entering surface and exits from the second optical waveguide device via the second light exiting surface, and wherein the second surface has a plurality of optical microstructures, and each of the optical microstructures comprises a reflecting surface.

2. The optical system of claim 1, wherein a part of the image light entering the first optical waveguide device is adapted to be reflected by the at least one first beam splitter and exit from the first optical waveguide device via the first light exiting surface, the image light exiting from the first optical waveguide device is adapted to enter the second optical waveguide device via the second light entering surface, the reflecting surface is adapted to reflect the image light entering the second optical waveguide device, and a part of the image light reflected by the reflecting surface is adapted to be reflected by the at least one second beam splitter and exits from the second optical waveguide device via the second light exiting surface.

3. The optical system of claim 2, wherein the first optical waveguide device further comprises a first side surface, a second side surface and a third side surface, the first side surface connects to the first light entering surface, the first side surface is parallel to the first light exiting surface, the at least one beam splitter is disposed between the first side surface and the first light exiting surface, the second side surface connects to the first side surface and the first light exiting surface, the third side surface connects to the first side surface and the first light exiting surface, and the third side surface is parallel to the second side surface, wherein the image light is adapted to travel between the first side surface and the first light exiting surface and between the second side surface and the third side surface, and the at least part of the image light is reflected by the at least one first beam splitter to exit from the first optical waveguide device via the first light exiting surface before the at least part of the image light reaches the second side surface and the third side surface.

4. The optical system of claim 3, wherein the second surface of the second optical waveguide device is parallel to the second light exiting surface, the at least one second beam splitter is disposed between the second surface and the second light exiting surface, wherein the at least part of the image light is adapted to travel between the second surface and the second light exiting surface with total internal reflection.

5. The optical system of claim 2, wherein the image light exiting from the second optical waveguide device is adapted to enter a pupil, the image light before entering the first optical waveguide device has a first entrance pupil opening angle in a first direction and a second entrance pupil opening angle in a second direction, the image light exiting from the second optical waveguide device and entering the pupil has a first light convergence angle in a third direction and has a second light convergence angle in a fourth direction, wherein the first direction is perpendicular to the second direction, the third direction is perpendicular to the fourth direction, the first entrance pupil opening angle is equal to the first light convergence angle, and the second entrance pupil opening angle is equal to the second light convergence angle.

6. The optical system of any one of the preceeding claims, wherein each of the optical microstructures further comprises a connecting surface connecting to the reflecting surface, an acute angle between the reflecting surface and a reference plane is equal to an acute angle between the at least one second beam splitter and the second light exiting surface, there is an angle between the connecting surface and the reference plane, and the angle is greater than 0 degree and less than or equal to 90 degrees, wherein the reference plane is parallel to the second light exiting surface.

7. The optical system of claim 6, wherein each of the optical microstructures further comprises a light reflecting layer and a light absorbing layer, the light reflecting layer is disposed on the reflecting surface, and the light absorbing layer is disposed on the connecting surface.

8. The optical system of any one of the preceeding claims, wherein the optical system further comprises a reflecting mirror disposed beside the first light entering surface, the reflecting mirror is adapted to reflect the image light to enter the first optical waveguide device via the first light entering surface.

9. The optical system of any one of the preceeding claims, wherein the at least one first beam splitter is not parallel to the first light entering surface, and the at least one second beam splitter is not parallel to the second light entering surface.

10. The optical system of any one of the preceeding claims, wherein an angle between the first light entering surface and the first light exiting surface is less than or equal to 90 degrees.

11. The optical system of any one of the preceeding claims, wherein the at least one first beam splitter is a plurality of first beam splitters, and the at least one second beam splitter is a plurality of second beam splitters, wherein the plurality of first beam splitters are parallel to each other and spaced apart, and the plurality of second beam splitters are parallel to each other and spaced apart.

12. The optical system of any one of the preceeding claims, wherein there is a gap between the second light entering surface and the first light exiting surface, and the second light entering surface is parallel to the first light exiting surface.

13. The optical system of any one of the preceeding claims, wherein the image light is provided by a projection device, and the image light transmits to the optical system.

FIG. 1A

FIG. 1B

EP 3 351 993 A1

FIG. 1C

EP 3 351 993 A1

FIG. 1D

FIG. 1E

X
Y ←⊙
Z ↓

IL4(IL)  IL3(IL)                    ExS1   130

124 } 120
122 }

ES2  126  SS1

D  PL  ES1

110

100

# FIG. 1F

Z
Y ←⊗
X ↓

110   IL5(IL)                    120
D  PL          126   SS2   122  124

IL6(IL)                SS3

100

# FIG. 1G

FIG. 1H

EP 3 351 993 A1

FIG. 1I

EP 3 351 993 A1

FIG. 1J

FIG. 2A

FIG. 2B

FIG. 3

FIG. 4A

FIG. 4B

FIG. 4C

IL9(IL)    ExS1

$\theta_5$

524
522 } 520

ES1    526    ES2

D   PL
110   IL10(IL)

500

# FIG. 5

640   $\theta_6$   IL    ExS1

ES1

624
622 } 620

PL
610
D

PA   626   ES2

600

# FIG. 6

Europäisches
Patentamt

European
Patent Office

Office européen
des brevets

**EUROPEAN SEARCH REPORT**

Application Number

EP 17 20 3094

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2011/024291 A1 (SHIMADZU CORP [JP]; TANAKA MASATO [JP]) 3 March 2011 (2011-03-03) * the whole document * ----- | 1-13 | INV. G02B27/01 |
| Y | US 2006/132914 A1 (WEISS VICTOR [IL] ET AL) 22 June 2006 (2006-06-22) * abstract * * paragraph [0100] - paragraph [0107] * * paragraph [0330] - paragraph [0340] * * figures 1A, 1B, 4B, 28, 29 * ----- | 1-13 | |

TECHNICAL FIELDS
SEARCHED     (IPC)

G02B

The present search report has been drawn up for all claims

| Place of search | Date of completion of the search | Examiner |
|---|---|---|
| Munich | 9 May 2018 | Schenke, Cordt |

EPO FORM 1503 03.82 (P04C01)

## ANNEX TO THE EUROPEAN SEARCH REPORT
## ON EUROPEAN PATENT APPLICATION NO.

EP 17 20 3094

This annex lists the patent family members relating to the patent documents cited in the above-mentioned European search report.
The members are as contained in the European Patent Office EDP file on
The European Patent Office is in no way liable for these particulars which are merely given for the purpose of information.

09-05-2018

| Patent document cited in search report | | Publication date | Patent family member(s) | | Publication date |
|---|---|---|---|---|---|
| WO 2011024291 | A1 | 03-03-2011 | NONE | | |
| US 2006132914 | A1 | 22-06-2006 | EP | 1639394 A2 | 29-03-2006 |
| | | | US | 2006132914 A1 | 22-06-2006 |
| | | | WO | 2004109349 A2 | 16-12-2004 |

EPO FORM P0459

For more details about this annex : see Official Journal of the European Patent Office, No. 12/82

**EP 3 351 993 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201710043567